# EUROPÄISCHE PATENTSCHRIFT

(11) **EP 2 005 772 B1**
(45) Veröffentlichungstag und Bekanntmachung des Hinweises auf die Patenterteilung: **25.03.2009**
(21) Anmeldenummer: 07722162.0
(22) Anmeldetag: 03.04.2007
(51) Int. Cl.: H04W 8/18

(54) **VERFAHREN UND EINRICHTUNG ZUM FÜHREN VON TELEFONGESPRÄCHEN IN MEHREREN MOBILFUNKNETZEN**
METHOD AND DEVICE FOR CONTROLLING TELEPHONE CALLS IN A PLURALITY OF MOBILE RADIO NETWORKS
PROCEDE ET DISPOSITIF POUR MENER DES COMMUNICATIONS TELEPHONIQUES DANS PLUSIEURS RESEAUX DE RADIOTELEPHONIE MOBILE

(30) Priorität: 11.04.2006 DE 102006017364
(43) Veröffentlichungstag der Anmeldung: 24.12.2008
(73) Patentinhaber: Youngtel GmbH, 40474 Düsseldorf (DE)
(72) Erfinder: ASTHOFF, Stefan, 40474 Düsseldorf (DE)
(74) Vertreter: COHAUSZ DAWIDOWICZ HANNIG & SOZIEN
(86) Internationale Anmeldenummer: PCT/DE2007/000604
(87) Internationale Veröffentlichungsnummer: WO 2007/115545

(56) Entgegenhaltungen:
- EP-A- 1 051 052
- EP-A1- 1 223 768
- WO-A-99/45730
- WO-A-20/04032545
- DE-A1- 10 340 224
- NL-C2- 1 013 738

## Beschreibung

Die Erfindung betrifft ein Verfahren zum Führen von Telefongesprächen in mehreren Mobilfunknetzen von einem Mobilfunkgerät (Handy) aus, wobei über das Mobilfunkgerät und die integrierte SIM-Karte eine ständige Netzverbindung aufgebaut und aufrechterhalten wird. Die Erfindung betrifft außerdem eine Einrichtung mit einem Mobilfunkgerät mit Tastatur, SIM-Karte und üblichen Schaltkreisen, wobei die SIM-Karte auf der Geräterückseite in eine vorgesehene, Kontakte aufweisende Ausnehmung einsetzbar und über die Schaltkreise und über die SIM-Karte eine ständige Verbindung mit dem zugeordneten Mobilfunknetz herstellbar ist.

Bekannt sind Verfahren und dementsprechend arbeitende Mobilfunkgeräte, mit denen ohne besondere Maßnahmen und vor allem Sondergebühren innerhalb eines bestimmten Mobilfunknetzes mit den verschiedensten Teilnehmern telefoniert werden kann. Sobald aber ein Teilnehmer einen Teilnehmer erreichen will oder erreicht, der in einem anderen Mobilfunknetz arbeitet bzw. mit einem solchen Mobilfunknetz arbeitet, werden sog. IC-Gebühren fällig, die die Netzbetreiber oder Netzinhaber sich gegenseitig berechnen, wenn von einem in das andere Mobilfunknetz hineintelefoniert wird. Die dadurch entstehenden bzw. eingenommenen zusätzlichen Gebühren sind beträchtlich, wobei diese Gebühren noch höher sind, wenn in ausländische Netze hinein verbunden werden muss. Ob es Gründe für diese Gebühren gibt, kann dahingestellt bleiben, jedenfalls müssen auch sog. Mobilfunk-Serviceprovider entsprechende Gebühren erheben und an die jeweiligen Mobilfunknetzbetreiber abführen. Diese Mobilfunk-Serviceprovider können dabei im Auftrage der Mobilfunknetz-Betreiber bzw. -Inhaber SIM-Karten der entsprechenden Netzbetreiber verkaufen bzw. mit dem jeweiligen Gesprächsteilnehmer entsprechende Gebühren abrechnen. Nachteilig neben den zusätzlichen Kosten, die bei netzübergreifenden Gesprächen fällig werden, ist, dass auch die einzelnen Mobilfunknetzbetreiber teilweise unterschiedliche Kosten erheben, wobei der Kunde an einen solchen Netzbetreiber gebunden ist, wenn einmal ein Vertrag abgeschlossen wurde. Er hat dann keine Wahlmöglichkeiten mehr.

Des weiteren ist aus der Offenlegungsschrift DE 103 40 224 A1 (Deutsche Telekom AG) 24.03.2005 ein Mobilfunkgerät mit mehrfacher Nutzungsmöglichkeit bekannt. Das in der Offenlegungsschrift beschriebene Mobilfunkgerät ist zur Aufnahme von mindestens zwei' voneinander unabhängigen Identifikationsmitteln ausgebildet. Für ankommende Rufe wird durch die angewählte Rufnummer und für abgehende Rufe durch den Benutzer mithilfe eines Bedienmittels bestimmt, welches der Identifikationsmittel in die Verbindung einbezogen wird.

Ein wesentlicher Nachteil des in der Offenlegungsschrift DE 103 40 224 A1 beschriebenen Mobilfunkgeräts liegt darin, dass bei abgehenden Rufen der Benutzer selbsttätig das Mobilfunknetz, über das ein B-Teilnehmer angerufen werden soll, durch Bestimmung eines entsprechenden Identifikationsmittels auswählen muss.

Der Erfindung liegt nun die Aufgabe zugrunde, ein Verfahren und eine Einrichtung zu schaffen, die eine gegenüber dem Stand der Technik effizientere Mobilfunknetzauswahl ermöglichen.

Die Aufgabe wird entsprechend des beanspruchten Verfahrens dadurch gelöst, dass über einen Transmitter, der zwischen die Tastatur des Mobilfunkgeräts mit den Zifferntasten und die SIM-Karten geschaltet ist, der bei einer Anwahl verwendete Vorwahlblock und damit das gewünschte Mobilfunknetz erkannt, die dem Vorwahlblock zugeordnete SIM-Karte angewählt und deren parallele Netzverbindung angesprochen wird.

Mit Hilfe eines derartigen Verfahrens ist es somit möglich, mit einem einzigen Handy bzw. Mobilfunkgerät in unterschiedlichen Netzen zu telefonieren und zwar jeweils dort, wo der Gesprächspartner angeschlossen ist. Dadurch fallen die sog. IC-Gebühren nicht an, weil ja mit dem ein und dem gleichen Mobilfunkgerät in dem gleichen Mobilfunknetz telefoniert wird, das auch der Gesprächspartner wahrnimmt. Diese netzinternen Gespräche werden z. B. im Moment mit 5 Cent abgerechnet, während bei Anfall von IC-Gebühren um 300 bis 400 % höhere Kosten bzw. Gebühren anfallen würden. Vorteilhaft ist darüber hinaus, dass bei einem derart ausgelegten Verfahren bzw. Handy nun auch die Erreichbarkeit des jeweiligen Netzkunden gewährleistet ist, weil er sich das von ihm zu nutzende Mobilfunknetz aussuchen kann, sodass er jeweils dort telefoniert, wo er mit einem Parallel-Telefonnutzer und in einem jeweils optimalen Bereich sprechen kann. Er hat zahlreiche Wahlmöglichkeiten, sodass insgesamt gesehen, eine wesentlich bessere Ausnutzung der zur Verfügung stehenden Gesamttechnik möglich ist. Wichtig ist darüber hinaus aber sicherlich auch der psychologische Effekt und der Komfort, immer günstig zu telefonieren und günstig erreichbar zu sein. Der jeweilige Gesprächspartner hat natürlich den gleichen Vorteil, da er seinen Freund oder seine Freundin jeweils über sein Netz anrufen kann, sodass auch der Gesprächspartner dann in den Genuss kommt, ein netzinternes und damit preisgünstiges Gespräch zu führen. Zweckmäßigerweise werden über entsprechende Mobilfunk-Serviceprovider, die sowieso die entsprechenden SIM-Karten beschaffen können, die Gespräche abgerechnet, wobei der Mobilfunkgerätebenutzer nur eine Rechnung für die Nutzung von mehreren Mobilfunknetzen bekommt. Ebenfalls denkbar ist die Nutzung von unabhängig voneinander erworbenen SIM-Karten der unterschiedlichen Netzbetreiber, wobei hier zwar der Vorteil von nur einer Abrechnung für den Nutzer entfällt, jedoch immer noch ein beträchtliches Einsparungspotenzial besteht.

Besonders zweckmäßig ist es gemäß der Erfindung, wenn die parallelen Netzverbindungen anhand der Vorwahlblöcke oder einem anderen oder weiteren netzzuweisenden Merkmalen identifiziert werden. Dabei ist es sicherlich von Vorteil, wenn mehrere Merkmale berücksichtigt werden, um so falsche Netzverbindungen von vorn herein gänzlich auszuschließen.

Nach einer weiteren Verfahrenvariante ist vorgesehen, dass die parallelen Netzverbindungen über die SIM-Karte oder ein alternatives, netzzuordnendes Speichermedium ausgewählt werden. Auch hierbei ist die Sicherheit der oberste Gesichtspunkt, der eine solche Verfahrensführung auszeichnet.

Zur Durchführung des Verfahrens ist eine Einrichtung vorgesehen, bei der dem Gehäuse des Mobilfunkgerätes mehrere integrierte, den interessierenden Mobilfunknetzen zugehörige SIM-Karten zugeordnet und eine ständige Verbindung mit dem ihnen zugeordneten Mobilfunknetz herstellend und wahrend ausgebildet und geschaltet sind und dass zwischen die Tastatur mit den Zifferntasten und die SIM-Karten ein die den gewählten Vorwahlblock zugeordnete SIM-Karte anwählender und die Verbindung herstellender Transmitter geschaltet ist. Bei einem derart ausgebildeten Mobilfunkgerät kann auf die bisherige Technik voll zurückgegriffen werden, d. h. es wird ein Mobilfunkgerät oder Handy annähernd üblicher Bauart verwendet, dem nur mehrere SIM-Karten zugeordnet werden können und das gleichzeitig in mehreren Mobilfunknetzen erreichbar ist. Dabei kann der Benutzer selber entscheiden, wie viel SIM-Karten und wie viel Netzanschlüsse er haben will, um mit seinen Freunden oder wem auch immer preisgünstig und schnell und sicher telefonieren zu können. Über diese Ausbildung des Mobilfunkgerätes und der SIM-Karten mit den Schaltkreisen ist dabei sichergestellt, dass immer eine Anbindung an das vorgesehene Mobilfunknetz gewährleistet ist, sodass natürlich auch ein Anruf von Dritten jederzeit möglich ist, aber auch ein Gespräch im jeweils gewünschten Mobilfunknetz. Beim Anwählen oder auch Angewähltwerden wird über den Transmitter der jeweilige Vorwahlblock und damit das gewünschte Mobilfunknetz erkannt, dass dann innerhalb des Mobilfunkgerätes aktiviert bzw. scharf geschaltet wird, sodass das Gespräch dann rausgehend und reingehend stattfinden kann.

Um nun sicherzustellen, dass auch bei Nichtanwesenheit des Benutzers eingehende Gespräche auch systemgerecht und preiswert aufgenommen und gespeichert werden, sieht die Erfindung vor, dass der Transmitter die eingehenden Gespräche den Netzen zugeordneten Anrufspeichern zuleitend ausgebildet ist. Der Transmitter sorgt also dafür, dass ein eingehendes Gespräch jeweils dem Anrufspeicher zugeordnet wird, der dem jeweiligen Mobilfunknetz zugeordnet ist. Denkbar ist es natürlich auch, den Transmitter so auszubilden und auszurüsten, dass jeweils mit einem Anrufspeicher gearbeitet werden kann, wobei der Transmitter dann dem "Mobilfunknetz" zur Kenntnis gibt, dass das eingehende Gespräch richtig und im vorhandenen Mobilfunknetz-Anrufspeicher notiert wird.

Weiter vorn ist bereits darauf hingewiesen worden, dass im Wesentlichen auf vorhandene Technik zurückgegriffen werden kann, d. h. auf entsprechende Mobilfunkgeräte, wobei lediglich mehrere SIM-Karten integriert werden müssen. Dies erreicht man am Einfachsten und Sichersten, wenn auf der Geräterückseite mehrere integrierte Ausnehmungen für SIM-Karten vorgesehen sind, in die dann die SIM-Karten eingesetzt werden können, um dadurch sowohl den aus- und eingehenden Gesprächsverkehr zu aktivieren. Ist also beispielsweise die für ein bestimmtes Mobilfunknetz vorgesehene Ausnehmung bzw. besser gesagt für die entsprechende SIM-Karte nicht im Einsatz, so kann der Transmitter auch nichts erkennen und auch nichts zuordnen, sodass dann beispielsweise eine negative Mitteilung an den Anrufenden erfolgen würde, so wie bereits heute bei ausgeschaltetem Mobilfunkgerät oder nicht eingelegter SIM-Karte üblich. Der Anrufende ist dann entweder gezwungen über ein anderes Mobilfunknetz zu gehen oder aber sonst wie den Kontakt mit seinem "Gegenüber" herzustellen. Naturgemäß werden für SIM-Karten und damit für die Belegung eines bestimmten Mobilfunknetzes Gebühren fällig, doch sind diese im Gegensatz zu den IC-Gebühren überschaubar, sodass in aller Regel bei Bedarf ein Benutzer auch vier oder mehr SIM-Karten einsetzen kann, um die anderen Preisvorteile und auch technischen Vorteile bei Benutzung mehrerer SIM-Karten wahrzunehmen.

Um dem Benutzer möglichst viele Wahlmöglichkeiten zu lassen, sieht die Erfindung vor, dass die den Ausnehmungen zugeordneten Kontakte mit dem Einsetzen einer SIM-Karte aktivierbar ausgebildet sind. Dann ist die Möglichkeit für den Benutzer gegeben, mit einer entsprechend zugeordneten SIM-Karte zu arbeiten oder aber bestimmte Mobilfunknetze unbeachtet zu lassen, wenn er dort beispielsweise keine Gesprächspartner hat. Er kann somit seinen Bedürfnisse entsprechend sein Mobilfunkgerät ausrüsten und ausnutzen.

Um die Anzahl der zu verwendenden SIM-Karten zu erhöhen oder aber um die notwendigen Änderungen noch weiter zu reduzieren, sieht die Erfindung vor, dass auf der Geräterückseite eine vertieft ausgebildete, mehrere übereinander angeordnete SIM-Karten aufnehmende Ausnehmung mit Kontakten vorgesehen ist. Neben der Möglichkeit, mehrere SIM-Karten in der gleichen Ebene nebeneinander anzuordnen, ist hier die Möglichkeit vorgegeben, sie übereinander anzuordnen, um so dem Benutzer jeweils die Möglichkeit zu geben, mit einem praktisch unveränderten Mobilfunkgerät zu arbeiten, das schaltungstechnisch nur weniger aufwendig ist, als ein einfaches Mobilfunkgerät. Hier wird somit vorgeschlagen, dem Benutzer jeweils die Möglichkeit zu geben, mit einem praktisch unveränderten Mobilfunkgerät zu arbeiten, dass schaltungstechnisch nur weniger aufwendig ist, als ein einfaches Mobilfunkgerät. Die SIM-Karten sind zu einem Block zusammengefasst und sie können je nach Anzahl und Anordnung durch das Einsetzen in die entsprechend vertieft ausgebildete Ausnehmung aktiviert und dann auch ausgenutzt werden. Auch bei dieser Ausbildung müssen nicht alle SIM-Karten-Plätze im Block besetzt sein, sondern vielmehr hat der Benutzer die Möglichkeit, die SIM-Karten zu verwenden und zu platzieren, an deren Mobilfunknetz er Interesse hat.

Beim Einsetzen des entsprechenden SIM-Karten-Blockes in die vertieft ausgebildete Ausnehmung werden die jeweils benötigten SIM-Karten zweckmäßig aktiviert, wenn die notwendigen Kontakte den Seitenwänden der Ausnehmungen zugeordnet und die Kontakte der SIM-Karten korrespondierend angeordnet und ausgebildet sind. Somit braucht der Benutzer keine besondere Obacht zu geben, vielmehr schiebt er einfach den Block mit den ausgewählten SIM-Karten in die Ausnehmung hinein, um dann sofort telefonieren zu können. Auch diese Lösung ermöglicht - wie die weiter oben beschriebene - eine einfache Montage und ein schnelles Wirksamwerden der Einrichtung, wobei die den Seitenwänden zugeordneten Kontakte vielleicht einfacher als die in die Zwischenräume einzuschiebenden Kontakte sind, dazu hat die zuletzt genannte Lösung den Vorteil, dass auf bisherige SIM-Karten zurückgegriffen werden kann, während bei der seitlichen Anordnung der Kontakte auch die SIM-Karten entsprechend angepasst werden müssen.

Der Transmitter wird nach der weiter vorne erläuterten Ausführung sowohl bei ausgehenden Telefonaten wie bei eingehenden Telefonaten die jeweils verwendeten Vorwahlen erkennen und damit die entsprechenden SIM-Karten bzw. Mobilfunknetze ansprechen und aktivieren. Da die entsprechenden Mobilfunknetze mit jeweils vier Ziffern arbeiten, also bestimmten Vorwahlblöcken, ist es zweckmäßig und relativ einfach, entsprechende Verbindungen herzustellen, wenn ein Transmitter zwischen Tastatur und SIM-Karten definierte Vorwahlblöcke erkennend und die Verbindung zur zugeordneten SIM-Karte herstellend ausgebildet und geschaltet ist. Hierbei ist es möglich, dass die jeweils letzte Kennziffer das entscheidende Merkmal für den Vorwahlblock ist oder aber der Vorwahlblock insgesamt, jedenfalls ist der Transmitter so zu schalten, dass er zunächst einmal nur die ersten vier Ziffern aufnimmt und verarbeitet, bevor er dann die gewählte Telefonnummer weiterverarbeitet und sich damit dann in das entsprechende Mobilfunknetz einwählt bzw. einschaltet.

Für den Benutzer ist zunächst einmal nicht unbedingt erkennbar, in welches Mobilfunknetz sich sein Mobilfunkgerät eingeschaltet hat oder einschalten will. Da er dieses vorher kennen und darüber hinaus auch kontrollieren will, ob das Gerät richtig gewählt bzw. er den richtigen Vorwahlblock eingetastet hat, ist es von Vorteil, wenn auf der Gerätevorderseite, neben der Tastatur, dem Sichtfeld und den weiteren Funktionstasten Netztasten vorgesehen sind, die als bei Ansprechen des jeweiligen Mobilfunknetzes aufleuchtende Leuchttasten aufgeführt sind. Wird also beispielsweise das D1-Mobilfunknetz angesprochen, so leuchtet die entsprechende Leuchttaste bzw. Netztaste auf und der Benutzer weiß, dass er richtig gewählt bzw. dass er im richtigen Mobilfunknetz ist. Dies hat psychologische Vorteile, hilft aber auch dabei, Fehlwahlen und Fehlschaltungen zu vermeiden, weil der Benutzer bei Aufleuchten einer falschen Netztaste sehr schnell das Gespräch unterbrechen kann und zwar bevor Kosten angefallen sind.

Nach einer Weiterbildung der Erfindung ist vorgesehen, dass die Netztasten bei Ausfall oder vom Nutzer gewünschter Überbrückung des Transmitters schaltbar und die Verbindung zur angewählten SIM-Karte herstellend ausgebildet sind. Mit Hilfe der Netztasten kann dann der Transmitter überbrückt werden, ohne dass das Mobilfunkgerät gleich ausfällt und nicht mehr benutzt werden kann. Der Benutzer kann somit für eine bestimmte Zeit sich so helfen, wobei der Vorteil dann auch ist, dass er nicht die jeweilige Vorwahl ganz eintippen muss, sondern vielmehr nur den jeweiligen Vorwahlblock ansprechen muss.

Als Alternative zu den leuchtenden Netztasten, ist eine Visualisierung des aktuell genutzten Mobilfunknetzes über das in jedem Handy vorhandene Display vorgesehen. Auch die manuelle Netzwahl durch Überbrückung des Transmitters kann alternativ über eine Menüführung im Display mit den vorhandenen Funktionstasten erreicht werden, um hierdurch die benötigten Änderungen an bereits bestehenden und zukünftigen Gerätemodellen so gering wie möglich zu gestalten.

Nicht ausgeschlossen ist, dass neue Mobilfunknetze hinzukommen oder aber das bei Benutzung des Mobilfunkgerätes im Ausland weitere Mobilfunknetze aktiviert werden sollen. Dies ist problemlos möglich, weil gemäß der Erfindung der Transmitter bezüglich der zu erkennenden Vorwahlblöcke einstellbar ausgebildet ist. Der Transmitter kann somit abweichend von den eingestellten und "ihm bekannten" Vorwahlblöcken mit ergänzenden Vorwahlblöcken versorgt werden, oder die Vorwahlblöcke können ausgetauscht werden, je nach dem wie viel SIM-Karten im Einsatz sind. Ist ein SIM-Karten-Platz noch frei, so ist bei entsprechend eingestelltem Vorwahlblock im Transmitter der weitere Ablauf wie weiter vorn besprochen einfach zu erreichen und zu sichern.

Nach einer Weiterbildung der Erfindung ist vorgesehen, dass nicht immer vier SIM-Karten oder mehrere SIM-Karten zum Einsatz kommen müssen, sondern dass dem Gehäuse des Mobilfunkgerätes eine Kombi-SIM-Karte zugeordnet sein kann, die die Funktion der anderen Mobilfunknetzen zugeordneten SIM-Karten mit übernehmend ausgebildet ist. Eine einzige SIM-Karte weist somit allen Netzbetreibern zuzuordnende Funktionen und Kennzeichen auf, sodass mit einer einzigen SIM-Karte gearbeitet werden kann.

Eine weitere Möglichkeit des Verfahrens zum Betreiben eines Mobilfunkgerätes ist die, bei der über die SIM-Karte und die Anwahl einer der zugehörigen Festnetznummern eine von mehreren in dem zugeordneten Festnetzanschluss mit Routingbox hinterlegten SIM-Karten anderer Mobilfunknetze angewählt wird, über die dann die Verbindung zu dem gewünschten netzinternen Gespräch über die erste SIM-Karte hergestellt wird. Hierdurch ist es möglich, mit einem SIM-Karten-Handy eine Festnetznummer anzuwählen, wobei dadurch eine der drei in der sogenannten Routingbox hinterlegten SIM-Karten angesprochen wird, sodass von da aus der Angerufene von der entsprechenden SIM-Karte angewählt wird und somit eine netzinternes Gespräch zu Stande kommt. Die Möglichkeit, mehrere derartiger SIM-Karten in einer Einheit zusammenzufassen ist somit hierbei vom Handy zum Festnetztelefon weitergegeben worden, nämlich zu der so genannten Routingbox. Es wird also nicht ein Festnetz- zu Handy-Gesprächen aktiviert, sondern nach wie vor wird ein Handy- zu Handy-Gespräch des gleichen Netzes bewirkt. Das führt - wie schon bei dem vier SIM-Karten Gerät beschrieben, zu deutlich günstigeren Gebühren, da die IC-Gebühren entfallen. Diese Lösung ist eine Variante, die den Bau des entsprechenden Vier-SIM-Karten-Handys außer acht lässt, sodass auch bisher auf dem Markt benutzte Handys zu kostengünstigem Telefonieren eingesetzt werden können. Diese externe Variante beinhaltet alle erfindungsrelevanten technischen Lösungen, die durch den beschriebenen Zwischenschritt, nämlich anwählen des externen Transmitters die gleichen Vorteile beinhaltet, wie das Vier-SIM-Karten-Handy. Alle technisch machbaren Lösungen werden somit hierbei eingesetzt, um die Kosten für den Endverbraucher zu senken.

Dazu dient eine Einrichtung, bei der in der Routingbox des zugeordneten Festnetzanschlusses mehrere, anderen Mobilfunknetzen zugehörige SIM-Karten hinterlegt sind, die über einen Transmitter, der über den Festnetzanschluss aktivierbar ist, gezielt ansprechbar und die Verbindung zur ersten SIM-Karte herstellend geschaltet sind. Wie schon erwähnt ist es hiermit somit möglich, den Festnetzanschluss jeweils nur als SIM-Karten-Speicher zu benutzen, nach wie vor aber die entsprechenden Gespräche über die zugeordneten Handys abzuwickeln.

Die Erfindung zeichnet sich somit insbesondere dadurch aus, dass mit Hilfe des erfindungsgemäßen Verfahrens und des Mobilfunkgerätes bzw. der erfindungsgemäßen Einrichtung mit ein und demselben Mobilfunkgerät Gespräche in unterschiedlichen Mobilfunknetzen geführt werden können, ohne dass sog. IC-Gebühren oder sonstige Sondergebühren anfallen, weil durch die beschriebene Schaltung und Ausbildung des Mobilfunkgerätes sichergestellt ist, dass der Nutzer jeweils mit dem Gesprächspartner in ein und demselben Mobilfunknetz spricht. Es wird jeweils netzintern gesprochen, sodass nur die relativ geringen Gebühren dieses Netzes anfallen, wobei der Nutzer problemlos für seine Gespräche das Mobilfunknetz aussuchen kann, wo seine Gesprächspartner sind oder wo Kostenvorteile zu erreichen sind. Die Ersparnis für den jeweiligen Kunden ist erheblich, weil die IC-Gebühren in der Regel um 300 bis 400 % über den netzinternen Gesprächsgebühren liegen und einen Großteil der eingehenden Mobilfunkrechnungen ausmachen. Häufig ist dem Nutzer bisher nicht bekannt, dass die wesentlich höheren Gebühren anfallen, wenn er von seinem Mobilfunknetz in ein anderes hineinwählt. Hierzu ist es gemäß der Erfindung auch möglich, dem Nutzer durch ein Blinklicht oder Ähnliches zur Kenntnis zu bringen, dass er einen Mobilfunknetz-Wechsel vornimmt. Er kann dann selber entscheiden, ob er dabei bleibt oder ob er das Gespräch unterbrechen will, sodass er einen Großteil an Vorteilen wahrnehmen kann, wenn er ein derartiges Mobilfunkgerät mit 4-SIM-Gerätetechnik oder Mehr-SIM-Gerätetechnik verwendet.

Ein weiterer Vorteil ist, dass er eine nahezu 100%ige Netzabdeckung und 100%iger Erreichbarkeit erwarten kann, weil er eben in dem jeweils günstigsten der ihm zur Verfügung stehenden Mobilfunknetze telefonieren kann und auch angerufen werden kann. Dabei nutzt auch der Anrufer den Vorteil, dass er netzintern sprechen kann, also ohne dass für ihn besondere IC-Gebühren oder Ähnliches anfallen. In der Bundesrepublik Deutschland sind vier Mobilfunknetzbetreiber tätig, wobei sie ihre Mobilfunknetze mit D1, D2, E und O₂ bezeichnet haben.

Weitere Einzelheiten und Vorteile des Erfindungsgegenstandes ergeben sich aus den nachfolgenden Beschreibungen der zugehörigen Zeichnungen, in denen ein bevorzugtes Ausführungsbeispiel mit den dazu notwendigen Einzelheiten und Einzelteilen dargestellt sind. Es zeigen:
- Figur 1: ein Mobilfunkgerät von der Vorderseite her gesehen,
- Figur 2: ein von der Rückseite her gesehenes Mobilfunkgerät,
- Figur 3: eine schematische Wiedergabe der Verbindung zwischen Transmitter und Vorwahlblockteilen,
- Figur 4: eine Teilansicht der Rückseite eines Mobilfunkgerätes mit vertiefter Ausnehmung für mehrere SIM-Karten und
- Figur 5: einen Schnitt durch das Mobilfunkgerät im Bereich der vertieften Ausnehmung mit den eingesetzten SIM-Karten.

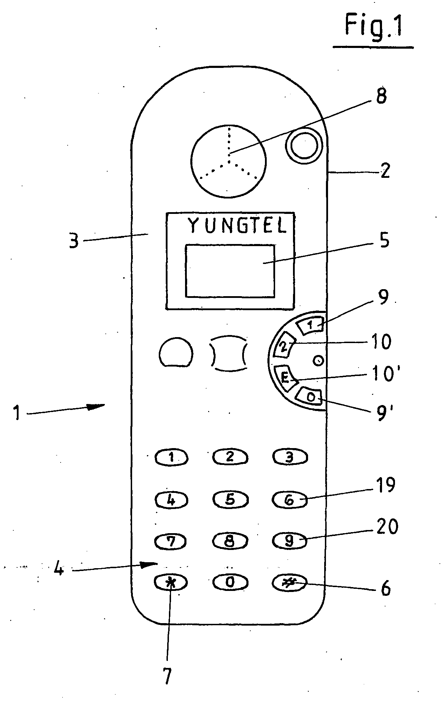

Bei dem in Figur 1 gezeigten Mobilfunkgerät 1 handelt es sich um ein übliches im Deutschen als Handy bezeichnetes Gerät, wobei an dem Gehäuse 2 erkennbar ist, dass es sich um ein älteres Baumuster handelt. Auf der Gerätevorderseite 3 ist die Tastatur 4 und das Sichtfeld 5 erkennbar. Als Funktionstasten 6 und 7 sind eine Raute und ein Stern verwendet, wie dies bei Mobilfunkgeräten heute üblich ist. Mit 8 ist die Hörmuschel bezeichnet. Von den üblichen Mobilfunkgeräten abweichend sind seitlich mehrere Netztasten 9, 9' und 10, 10' wiedergegeben, wobei die Netztaste 9 die Ziffer 1, die Netztaste 10 die Ziffer 2, die Netztaste 10' das E und die Netztaste 9' das O aufweisen, um leicht erkennbar zu machen, für welches Mobilfunknetz die jeweilige Netztaste 9, 9', 10, 10' gilt.

Mit 19 und 20 sind die Zifferntasten bzw. Zifferntaster bezeichnet, d. h. also die Taster die benötigt werden, um die gewünschte Gesprächskennzahl vorzugeben.

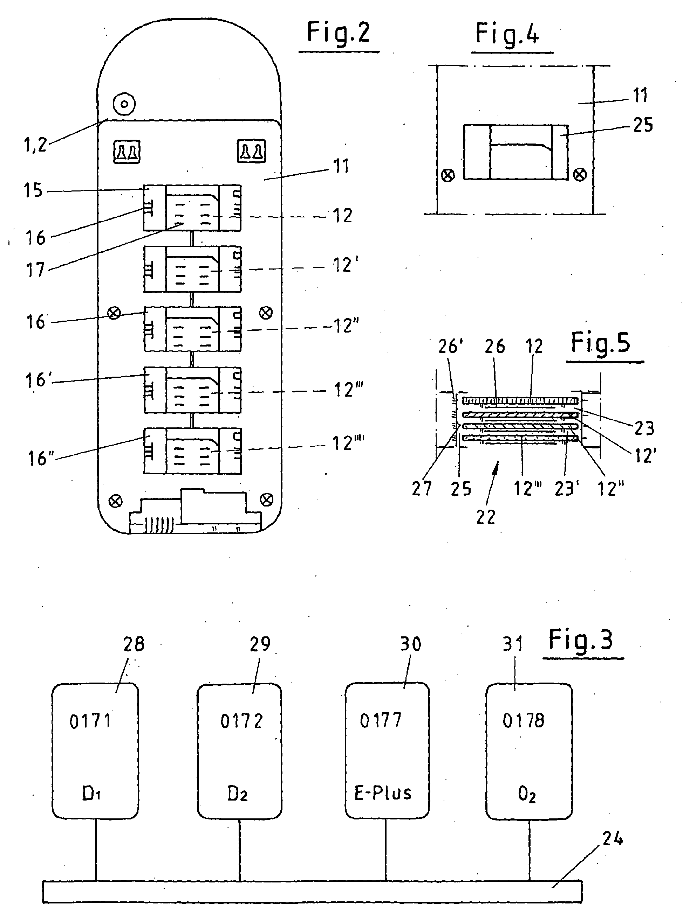

Auf der Geräterückseite 11 sind SIM-Karten 12, 12', 12", 12''', 12'''' angedeutet, wobei allerdings nur die jeweiligen Ausnehmungen 15, 18 dazu zu erkennen sind. Nach der Darstellung nach Figur 2 können also fünf unterschiedliche SIM-Karten 12, 12', 12", 12"', 12'''', eingesetzt werden, wobei korrekterweise die Darstellung nach Figur 2 den Zustand zeigt, wo keine SIM-Karte im Einsatz ist. Die Ausnehmungen sind alle entsprechend vorbereitet und vorgerüstet, sodass bei Einsetzen einer zugeordneten SIM-Karte 12 die Kontakte 16, 17 dafür sorgen, dass die Schaltkreise aktiviert werden und entsprechende Gespräche zur Ausführung kommen, wenn dies gewünscht ist.

Figur 3 zeigt eine vereinfachte Wiedergabe einer Schaltung, wobei der Transmitter mit 24 bezeichnet ist. Er ist jeweils mit den einzelnen Vorwahlblöcken 28, 29, 30, 31 verbunden, sodass er sowohl bei eingehenden Signalen wie bei ausgehenden Signalen sehr schnell und einfach wirksam werden kann, um das Gespräch dem jeweils gewünschten Mobilfunknetz bzw. der SIM-Karte zuzuordnen. Hierbei ist zu berücksichtigen, dass die einzelnen Vorwahlblöcke 28 bis 31 die entsprechenden Mobilfunknetze kennzeichnen bzw. eine Verbindung mit und von diesen ermöglichen und zwar unter Einschaltung des Transmitters 24.

Die Figuren 4 und 5 zeigen eine besondere Ausbildung, bei der statt der Vielzahl von Ausnehmungen 15, 18 hier nur eine vertiefte Ausnehmung 25 vorhanden ist und zwar auf der Geräterückseite 11. In diese Ausnehmung 25 kann ein Block 24 aus mehreren SIM-Karten eingesetzt werden, wobei nach der Darstellung in Figur 5 im Zwischenraum 23 zwischen den einzelnen SIM-Karten 12, 12', 12". 12"', 12'''' Kontakte 26 angeordnet sind, die für die Verbindung mit dem eigentlichen Mobilfunkgerät 1 Sorge tragen. In der gleichen Figur 5 ist aber auch angedeutet, dass diese Kontakte 26' der Seitenwand oder den Seitenwänden 27 der vertieften Ausnehmung zugeordnet sein können oder auch zusätzlich, wobei dann natürlich sowohl die Kontakte 26 als auch die SIM-Karten aufeinander abgestimmt werden müssen, sodass also die SIM-Karten zu ändern sind. Ansonsten können handelsübliche SIM-Karten verwendet werden.

Die in Figur 1 wiedergegebenen Netztasten 9, 9', 10, 10' sind so angeordnet und ausgebildet, dass durch einen Druck ein Kontakt hergestellt wird, der dann dafür sorgt, dass unter Umgehung oder auch unter Einschaltung des Transmitters 24 das jeweils zugeordnete Mobilfunknetz aktiviert oder angesprochen wird. Vor allem aber sind diese Netztasten 9, 9', 10, 10' als Leuchttasten ausgebildet, sodass der Nutzer eines derartigen Mobilfunkgerätes 1 sofort erkennt, welches der Mobilfunknetze bzw. welcher der Vorwahlblöcke 28, 29, 30, 31 angesprochen ist, wenn er mit Hilfe der Zifferntaster 19, 20 eine bestimmte Vorwahl eingegeben hat. Die geschilderte Ausbildung des Mobilfunkgerätes 1 verdeutlicht, dass eine Vielzahl von Möglichkeiten der Benutzung gegeben ist, vor allem aber eine, bei der IC-Gebühren in aller Regel nicht mehr fällig werden, wenn denn das Mobilfunkgerät richtig betrieben worden ist.

## Patentansprüche

1. Verfahren zum Führen von Telefongesprächen in mehreren Mobilfunknetzen von einem Mobilfunkgerät aus, wobei über das Mobilfunkgerät und mehrere, in dem Mobilfunkgerät integrierte SIM-Karten die unterschiedlichen Mobilfunknetzen zugeordnet sind, parallel deren jeweilige Netzverbindung aufgebaut und aufrechterhalten wird, **dadurch gekennzeichnet, dass** über einen Transmitter, der zwischen die Tastatur des Mobilfunkgeräts mit den Zifferntasten und die SIM-Karten geschaltet ist, der bei einer Anwahl verwendete Vorwahlblock und damit das gewünschte Mobilfunknetz erkannt, die dem Vorwahlblock zugeordnete SIM-Karte angewählt und deren parallele Netzverbindung angesprochen wird.

2. Verfahren nach Anspruch 1, **dadurch gekennzeichnet, dass** der Transmitter zunächst die ersten vier Ziffern aufnimmt und verarbeitet, bevor er die gewählte Telefonnummer weiterverarbeitet und sich damit dann in das durch den Vorwahlblock identifizierte Mobilfunknetz einwählt.

3. Einrichtung zur Durchführung des Verfahrens nach einem der Ansprüche 1 bis 2 mit einem Mobilfunkgerät (1) mit Tastatur (4), SIM-Karte (12) und Schaltkreisen, wobei die SIM-Karte (12) auf der Geräterückseite (11) in eine vorgesehene, Kontakte (16, 17) aufweisende Ausnehmung (15) einsetzbar und über die Schaltkreise und über die SIM-Karte (12) eine ständige Verbindung mit dem zugeordneten Mobilfunknetz herstellbare ist und wobei dem Gehäuse (2) des Mobilfunkgerätes (1) mehrere integrierte SIM-Karten (12, 12', 12", 12''') zugeordnet und eine ständige Verbindung mit dem ihnen zugeordneten Mobilfunknetz herstellend und wahrend ausgebildet und geschaltet sind **dadurch gekennzeichnet, dass** zwischen die Tastatur (4) mit den Zifferntasten (19, 20) und die SIM-Karten (12, 12', 12", 12''') ein Transmitter (24) geschaltet ist, mittels dem der Vorwahlblock und das durch diesen **gekennzeichnet**e Mobilfunknetz erkennbar ist und mit dem die dem gewählten Vorwahlblock (28 29, 30, 31) zugeordnete SIM-Karte (12) anwählbar ist.

4. Einrichtung nach Anspruch 3, **dadurch gekennzeichnet, dass** der Transmitter (24) die eingehenden Gespräche den Netzen zugeordneten Anrufspeichern zuleitend ausgebildet ist.

5. Einrichtung nach Anspruch 3, **dadurch gekennzeichnet, dass** auf der Geräterückseite (11) mehrere integrierte Ausnehmungen (15, 18) für SIM-Karten (12, 12', 12", 12''') vorgesehen sind.

6. Einrichtung nach Anspruch 5, **dadurch gekennzeichnet, dass** die den Ausnehmungen (15, 18) zugeordneten Kontakte (16, 17) mit dem Einsetzen einer SIM-Karte (12) aktivierbar ausgebildet sind.

7. Einrichtung nach einem der vorhergehenden Ansprüchen, **dadurch gekennzeichnet, dass** auf der Geräterückseite (11) eine vertieft ausgebildete, mehrere übereinander angeordnete SIM-Karten (12, 12', 12", 12''') aufnehmende Ausnehmung (25) mit Kontakten (26) vorgesehen ist.

8. Einrichtung nach einem der vorhergehenden Ansprüche,
**dadurch gekennzeichnet, dass** die SIM-Karten (12, 12', 12", 12''') übereinander und einen Block (22) bildend angeordnet sind, wobei die Kontakte (26) in die Zwischenräume (23) zwischen den SIM-Karten (12, 12', 12", 12''') einschiebbar ausgebildet sind.

9. Einrichtung nach einem der vorhergehenden Ansprüche, **dadurch gekennzeichnet, dass** die Kontakte (26) den Seitenwänden (27) der Ausnehmungen (25) zugeordnet und die Kontakte der SIM-Karten (12) korrespondierend angeordnet und ausgebildet sind.

10. Einrichtung nach einem der vorhergehenden Ansprüche,
**dadurch gekennzeichnet, dass** auf der Gerätevorderseite (3) neben der Tastatur (4), dem Sichtfeld (5) und den weiteren Funktionstasten (6, 7) Netztasten (9, 10) vorgesehen sind, die als bei Ansprechen des jeweiligen Mobilfunknetzes aufleuchtende Leuchttasten aufgeführt sind.

11. Einrichtung nach einem der vorhergehenden Ansprüche,
**dadurch gekennzeichnet, dass** die Netztasten (9, 10) bei Ausfall des Transmitters (24) schaltbar und die Verbindung zur angewählten SIM-Karte (12) herstellend ausgebildet sind.

12. Einrichtung nach einem der vorhergehenden Ansprüche,
**dadurch gekennzeichnet, dass** der Transmitter (24) bezüglich der zu erkennenden Vorwahlblöcke (28, 29, 30, 31) einstellbar ausgebildet ist.

13. Einrichtung nach einem der vorhergehenden Ansprüche,
**dadurch gekennzeichnet, dass** dem Gehäuse (2) des Mobilfunkgerätes (1) eine Kombi-SIM-Karte (12) zugeordnet ist, die die Funktion der anderen Mobilfunknetzen zugeordneten SIM-Karten (12', 12", 12"') mit übernehmend ausgebildet ist.

## Claims

1. Method for conducting telephone conversations on a plurality of mobile phone networks from a mobile phone whereby, using the mobile phone and a plurality of SIM cards assigned to different mobile phone networks and integrated into the mobile phone, their respective network connections are established and maintained in parallel, **characterised in that** via a transmitter, which is connected between the keypad of the mobile phone with the numerical keys and the SIM cards the dialling code block used when dialling, and thus the desired mobile phone network is recognized and the SIM card assigned to the dialling code block is addressed and its parallel network connection activated.

2. Method according to claim 1, **characterised in that** the transmitter first registers and processes the first four digits before it further processes the dialled telephone number and then therefore dials into the mobile phone network identified by the dialling code block.

3. Arrangement for carrying out the method according to one of the claims 1 to 2 comprising a mobile phone (1) with keypad (4), SIM card (12) and circuitry, whereby said SIM card (12) can be fitted into a slot (15) on the back (11) of the phone featuring contacts (16, 17) and a permanent connection with the assigned mobile phone network can be established via the circuits and via the SIM card (12), and whereby the housing (2) of the mobile phone (1) contains a plurality of integrated SIM cards (12, 12', 12'', 12''') which are designed and connected so as to establish and maintain a permanent connection with the mobile phone network assigned to them, **characterised in that** a transmitter (24) is connected between the keypad (4) with the numerical keys (19, 20) and the SIM cards (12, 12', 12'', 12''') by means of which the dialling code block and the mobile phone network identified by this can be recognised and with which the SIM card (12) assigned to the dialled dialling code block (28, 29, 30, 31) can be activated.

4. Arrangement according to claim 3, **characterised in that** the transmitter (24) is designed so as to route incoming calls to the call memories assigned to the respective networks.

5. Arrangement according to claim 3, **characterised in that** a plurality of integrated recesses (15, 18) for SIM cards (12, 12', 12'', 12''') are provided on the back (11) of the phone.

6. Arrangement according to claim 5, **characterised in that** the contacts (16, 17) assigned to the recesses (15, 18) are designed so as to be activated on insertion of a SIM card (12).

7. Arrangement according to one of the preceding claims, **characterised in that** a sunken recess (25) with contacts (26) accommodating a plurality of SIM cards (12, 12', 12'', 12''') arranged on top of one another is provided on the back (11) of the phone.

8. Arrangement according to one of the preceding claims, **characterised in that** the SIM cards (12, 12', 12'', 12''') are arranged on top of one another forming a block (22), whereby the contacts (26) are designed so as to slot into the intervening spaces (23) between the SIM cards (12, 12', 12'', 12''').

9. Arrangement according to one of the preceding claims, **characterised in that** the contacts (26) are arranged on the side walls (27) of the recess (25) and the contacts of the SIM cards (12) are arranged and designed so as to correspond with them.

10. Arrangement according to one of the preceding claims, **characterised in that,** on the front side (3) of the phone, in addition to the keypad (4), the display (5) and the other function keys (6, 7), network keys (9, 10) are provided which are designed as illuminating keys which light up when the relevant mobile phone network is addressed.

11. Arrangement according to one of the preceding claims, **characterised in that,** in the event of failure of the transmitter (24), the network keys (9, 10) are designed to be activated so as to establish the connection with the dialled SIM card (12).

12. Arrangement according to one of the preceding claims, **characterised in that** the transmitter (24) is designed so as to be adjustable with respect to the dialling code blocks (28, 29, 30, 31) which are to be recognised.

13. Arrangement according to one of the preceding claims, **characterised in that** the housing (2) of the mobile phone (1) contains a combination SIM card (12) which is designed to take on the function of the SIM cards (12', 12'', 12''') assigned to the other mobile phone networks.

## Revendications

1. Procédé pour mener des communications téléphoniques dans plusieurs réseaux téléphoniques mobiles d'un appareil de radiotéléphonie mobile, sachant que, par l'appareil de radiotéléphonie mobile et plusieurs cartes SIM intégrées dans l'appareil de radiotéléphonie mobile qui sont affectées à différents réseaux téléphoniques mobiles, une connexion de réseau respective est créée et maintenue de manière parallèle à ces cartes, **caractérisé en ce que,** par un émetteur-récepteur qui est connecté entre le clavier de l'appareil de radiotéléphonie mobile avec les touches de chiffres et les cartes SIM, qui reconnaît le bloc de présélection utilisé lors d'une sélection et donc le réseau téléphonique mobile souhaité, la carte SIM affectée au bloc de présélection est sélectionnée et sa connexion de réseau parallèle est atteinte.

2. Procédé selon la revendication 1, **caractérisé en ce que** l'émetteur-récepteur enregistre et traite au préalable les quatre premiers chiffres avant de transformer le numéro de téléphone sélectionné et se connecte ensuite au réseau téléphonique mobile identifié par le bloc de présélection.

3. Dispositif pour l'exécution du procédé selon l'une quelconque des revendications 1 à 2 avec un appareil de radiotéléphonie mobile (1) avec un clavier (4), une carte SIM (12) et des circuits, dans lequel la carte SIM (12) est insérable au dos de l'appareil (11) dans un évidement (15) prévu présentant des contacts (16, 17) et par le circuit et la carte SIM (12), une connexion continue peut être créée avec le réseau téléphonique mobile affecté, et dans lequel plusieurs cartes SIM (12, 12', 12'', 12''') intégrées sont affectées au boîtier (2) de l'appareil de radiotéléphonie mobile (1) et sont conçues et connectées en créant et maintenant une connexion continue avec le réseau téléphonique mobile qui leur est affecté , **caractérisé en ce qu'**un émetteur-récepteur (24) est connecté entre le clavier (4) avec les touches de chiffres (19, 20) et les cartes SIM (12, 12', 12'', 12'''), au moyen duquel le bloc de présélection et le réseau téléphonique mobile **caractérisé par** celui-ci est reconnaissable et avec lequel la carte SIM (12) affectée au bloc de présélection sélectionné (28, 29, 30, 31) est accessible.

4. Dispositif selon la revendication 3, **caractérisé en ce que** l'émetteur-récepteur (24) est conçu de manière à transmettre les conversations en cours aux enregistreurs affectés aux réseaux.

5. Dispositif selon la revendication 3, **caractérisé en ce que** plusieurs évidements (15, 18) intégrés pour des cartes SIM (12, 12', 12'', 12''') sont prévus au dos de l'appareil (11).

6. Dispositif selon la revendication 5, **caractérisé en ce que** les contacts (16, 17) affectés aux évidements (15, 18) sont conçus de manière à être activés avec l'utilisation d'une carte SIM (12).

7. Dispositif selon l'une quelconque des revendications précédentes, **caractérisé en ce qu'**au dos de l'appareil (11) un évidement (25) conçu en profondeur accueillant plusieurs cartes SIM (12, 12', 12", 12''') disposées les unes au-dessus des autres est prévu avec des contacts (26).

8. Dispositif selon l'une quelconque des revendications précédentes,
**caractérisé en ce que** les cartes SIM (12, 12', 12'', 12''') sont disposées les unes au-dessus des autres et formant un bloc (22), sachant que les contacts (26) sont conçus de manière intercalable dans les espaces (23) entre les cartes SIM (12, 12', 12'', 12''').

9. Dispositif selon l'une quelconque des revendications précédentes, **caractérisé en ce que** les contacts (26) sont affectés aux parois latérales (27) des évidements (25) et que les contacts des cartes SIM (12) sont disposés et conçus de manière correspondante.

10. Dispositif selon l'une quelconque des revendications précédentes,
**caractérisé en ce que** sur la face avant de l'appareil (3) à côté du clavier (4), du champ de vision (5) et des autres touches de fonction (6, 7) des touches d'alimentation (9, 10) sont prévues, qui sont représentées comme des touches lumineuses allumées lors du contact avec le réseau téléphonique mobile respectif.

11. Dispositif selon l'une quelconque des revendications précédentes,
**caractérisé en ce que** les touches d'alimentation (9, 10) sont conçues pour être connectables en cas de non fonctionnement de l'émetteur-récepteur (24) et fabriquer la liaison à la carte SIM (12) sélectionnée.

12. Dispositif selon l'une quelconque des revendications précédentes,
**caractérisé en ce que** l'émetteur-récepteur (24) est conçu de manière réglable par rapport aux blocs de présélection (28, 29, 30, 31) à reconnaître.

13. Dispositif selon l'une quelconque des revendications précédentes,
**caractérisé en ce qu'**une carte SIM combi (12) est affecté au boîtier (2) de l'appareil de radiotéléphonie mobile (1), qui est conçue de manière à reprendre la fonction des autres cartes SIM (12', 12'', 12''') attribuées aux autres réseaux téléphoniques mobiles.
